# EUROPEAN PATENT APPLICATION

(11) **EP 3 232 141 A1**
(43) Date of publication of application: **18.10.2017**
(21) Application number: 17165735.6
(22) Date of filing: 10.04.2017
(51) Int. Cl.: F25C 5/00, F25C 5/04

(54) **ICE BIN AND REFRIGERATOR PROVIDED WITH THE ICE BIN**

(30) Priority: 12.04.2016 KR 20160045094
(71) Applicant: Dongbu Daewoo Electronics Corporation, Seoul 06194 (KR)
(72) Inventor: LEE, Wang Goo, 06194 Seoul (KR)
(74) Representative: Rau, Schneck & Hübner Patentanwälte Rechtsanwälte PartGmbB

(57) **Abstract**

A refrigerator has an ice bin (40) that can break ice piece agglomerates therein. The ice bin (40) includes a breaking unit (200) rotatably installed in a discharge port (110) of the ice bin (40), the breaking unit (200) including a stationary blade (230) and rotatable blade (220). The ice bin (40) also includes a separation blade (400) rotatably installed parallel to the breaking unit (200) and configured to strike and separate ice pieces agglomerates into smaller pieces for discharging.

## Description

### TECHNICAL FIELD

Embodiments of the present disclosure relate to refrigerators, and more particularly, to ice making and dispensing mechanisms in refrigerators.

### BACKGROUND

In general, a refrigerator is an electronic appliance used for storing food or other items at low temperature. A cold air supply system in the refrigerator operates to supply cold air for circulation in the storage space therein. A storage compartment is usually disposed in a main body with an open front which can be sealed by a door.

Some refrigerators have an ice maker installed in a door, which are called door-type ice makers. In such a configuration, ambient air is often undesirably introduced into the refrigerator whenever the door is opened, causing the temperature in an ice storage box (hereinafter referred to as "ice bin") to rise. As a result, ice pieces stored in the ice bin may become melted partially. When the melted ice pieces in the ice-bin freeze again, they may adhere to each other, thereby forming a large lump or agglomerate which likely congests the discharge port disposed in the ice bin and ice cannot be dispensed.

One approach to solve the ice agglomeration problem is to enhance heat insulation of the refrigerator door, such as increasing the heat insulation thickness of the door or using a vacuum heat insulation material.

Unfortunately, increasing the heat insulation thickness of the door has a structural limit and using a vacuum heat insulation material not only increases the manufacturing cost of the refrigerator, but also fails to provide satisfactory effectiveness in preventing ice agglomeration in the ice bin.

### [Prior Art Documents]

[Patent Documents]
Patent Document 1: Korean Patent Application Publication No. 10-2009-74984 (published on July 8, 2009)

### SUMMARY

Therefore, embodiments of the present disclosure provide an ice bin capable of effectively breaking ice agglomerates for discharging.

According to one embodiment, an ice bin having improved ice separating performance is disclosed. The ice bin includes a housing configured to store ice pieces therein and provided with a discharge port for discharging the ice pieces; a breaking unit rotatably installed in the discharge port and rotatable about the first rotary shaft; a second rotary shaft operatively coupled to the first rotary shaft and disposed above the first rotary shaft; and a separation blade coupled to the second rotary shaft in a parallel relationship with the breaking unit and configured to strike and separate ice pieces agglomerates responsive to rotation of the second rotary shaft.

Further, the breaking unit may include a breaking blade coupled to the first rotary shaft and rotatable in a forward direction and a reverse direction and configured to break or not to break the ice pieces depending on a rotation direction of the breaking blade; and a fixed blade fixed to one side of the housing and positioned in an ice breaking direction of the breaking blade and operable to provide a supporting reaction force when breaking the ice pieces.

Further, the second rotary shaft may be provided with a driven gear meshing with a driving gear of the first rotary shaft, and the second rotary shaft is coupled to a rotation center of the driven gear.

Further, the second rotary shaft may be disposed in a position shifted from an immediately upward position of the first rotary shaft toward one side. The ice pieces can then be transferred toward the breaking unit.

Further, the separation blade may include a coupling portion removably coupled to the second rotary shaft and having a substantially C-shaped bent structure; and striking portions extending from the opposite ends of the coupling portion in a radial direction of the second rotary shaft and configured to strike and separate ice pieces agglomerates.

Further, the separation blade may include one or more separation blades.

Embodiments of the present disclosure are directed to the problem that the ice pieces stored in an ice bin may agglomerate and thus cannot be discharged efficiently. One embodiment of the present disclosure may provide an ice bin having improved ice separating performance and a refrigerator comprising the ice bin, which are advantageously capable of separating and discharging ice pieces stored in the ice bin despite formation of ice agglomerate.

### BRIEF DESCRIPTION OF THE DRAWINGS

Fig. 1 is a perspective view illustrating a refrigerator provided with an exemplary ice bin according to one embodiment of the present disclosure.
Fig. 2 is a side view illustrating the structure of the exemplary ice bin according to one embodiment of the present disclosure.
Fig. 3 is a front view illustrating the structure of the exemplary ice bin according to one embodiment of the present disclosure.
Fig. 4 is an assembled perspective view illustrating a separation blade, a second rotary shaft and a driven gear installed in the exemplary ice bin according to one embodiment of the present disclosure.
Fig. 5 is another view of the components illustrated in Fig. 4.
Fig. 6 is a front view illustrating the assembled state of the second rotary shaft and the driven gear shown in Figs. 4 and 5.

### DETAILED DESCRIPTION

In the following detailed description, reference is made to the accompanying drawings, which form a part hereof. The illustrative embodiments described in the detailed description, drawings, and claims are not intended to be limiting. Other embodiments may be utilized, and other changes may be made, without departing from the spirit or scope of the subject matter presented here.

One or more exemplary embodiments of the present disclosure will be described more fully hereinafter with reference to the accompanying drawings, in which one or more exemplary embodiments of the disclosure can be easily determined by those skilled in the art. As those skilled in the art will realize, the described exemplary embodiments may be modified in various different ways, all without departing from the spirit or scope of the present disclosure, which is not limited to the exemplary embodiments described herein.

It is noted that the drawings are illustrative and are not necessarily to scale. Relative sizes and proportions of parts in the drawings may be exaggerated or reduced in size, and a predetermined size is merely exemplary. The same reference numerals designate the same structures, elements, or parts illustrated in two or more drawings in order to exhibit similar characteristics.

The exemplary drawings of the present disclosure illustrate ideal exemplary embodiments of the present disclosure in more detail. As a result, various modifications of the drawings are expected. Accordingly, the exemplary embodiments are not limited to a specific form of the illustrated region, and for example, include a modification due to manufacturing.

The configuration and operation according to one embodiment of the present disclosure will now be described in detail with reference to the accompanying drawings.

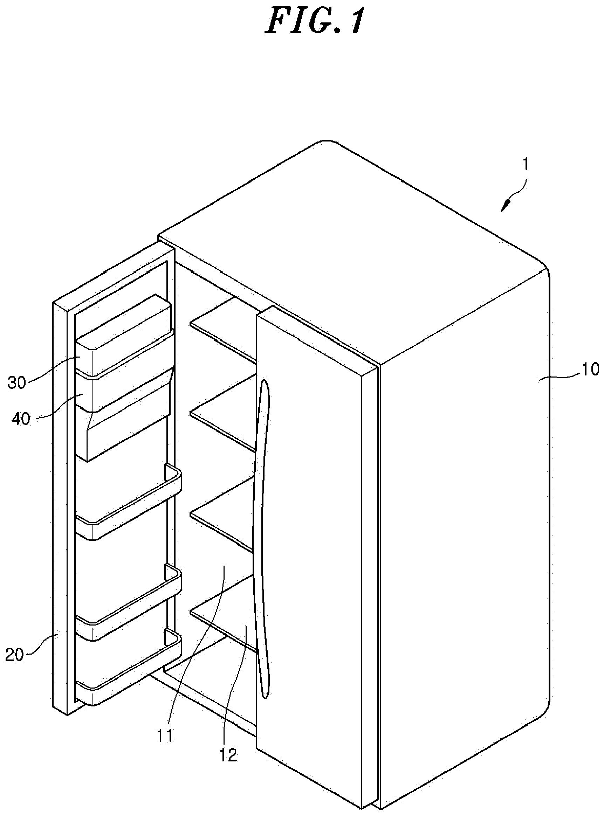

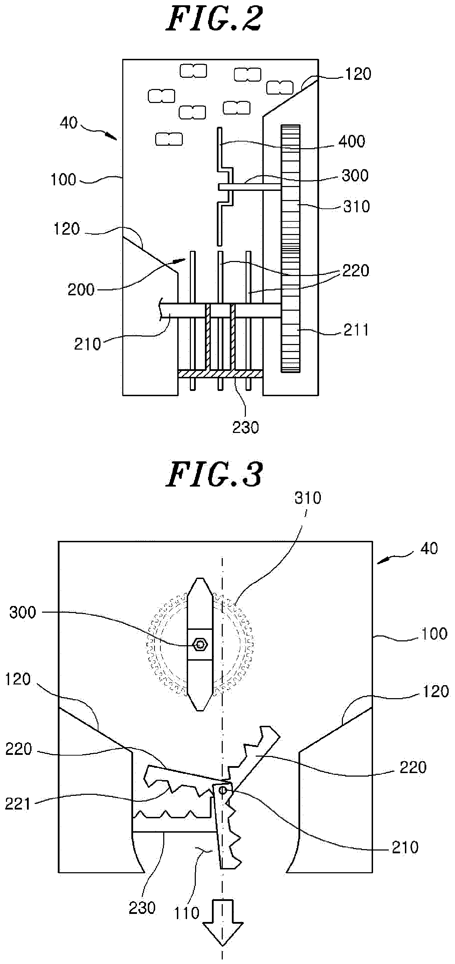

Fig. 1 is a perspective view illustrating a refrigerator provided with an exemplary ice bin according to one embodiment of the present disclosure. Fig. 2 is a side view illustrating the structure of the exemplary ice bin according to one embodiment of the present disclosure. Fig. 3 is a front view illustrating the structure of the exemplary ice bin according to one embodiment of the present disclosure.

Referring first to Fig. 1, the refrigerator 1 according to one embodiment of the present disclosure may include a main body 10, a door 20, an ice maker 30 and an ice bin 40.

The main body 10 defines the outer body of the refrigerator 1. A plurality of storage compartments 11 may be included in the main body 10. The storage compartments 11 may be divided into a freezer compartment disposed at one side of the main body 10 and a refrigeration compartment disposed at the other side of the main body 10. A partition wall for dividing the storage compartments 11 into left and right compartments may be disposed in the storage compartments 11. Shelves 12 may be disposed along an up-down direction.

The door 20 is rotatably installed in the main body 10 for sealing the storage compartments 11. One door 20 may be disposed in the main body 10. Alternatively, there may be separate doors for the refrigeration compartment, the freezer and other storage compartments 11, respectively.

The ice maker 30 may be disposed at one side of the door 20 to produce ice pieces. The ice maker 30 can be implemented in any suitable manner that is well known in the art.

The ice bin 40 is disposed in the door 20, for example under the ice maker 30, for storing ice pieces produced in the ice maker 30. The ice pieces produced at a predetermined size in the ice maker 30 may stick to each other and may form a large lump or agglomerate when they are stored in the ice bin 40. The ice bin 40 according to the present embodiment is configured to easily separate an ice agglomerate. The ice bin 40 may then discharge ice pieces in small size, e.g., in the same size when the ice pieces are initially made.

As illustrated in Figs. 2 and 3, the ice bin 40 according to one embodiment of the present disclosure may include a housing 100, a breaking unit 200, a first rotary shaft 210, a second rotary shaft 300 and a separation blade 400.

The housing 100 may accommodate ice pieces therein. A discharge port 110 for discharging ice pieces therethrough may be disposed in a lower portion of the housing 100. The ice pieces produced in the ice maker 30 may fall into the housing 100 through an upper portion of the housing 100 and may be stored within the housing 100. Ice pieces may be discharged from the ice bin 40 through the discharge port 110 at the lower portion of the housing 100. A guide part 120 inside the housing 100 can guide ice pieces toward the discharge port 110.

The breaking unit 200 may be disposed in the discharge port 110 and may rotate about the first rotary shaft 210. The breaking unit 200 may break the ice pieces into fine pieces before they are discharged out of the housing 100 through the discharge port 110. The breaking unit may also directly discharge ice pieces without breaking them. Thus, the first rotary shaft 210 may be rotated in a forward direction or a reverse direction.

For example, if the first rotary shaft 210 is rotated in the forward direction, the breaking unit 200 may break and then discharge the ice pieces. If the first rotary shaft 210 is rotated in the reverse direction, the ice pieces may be discharged without being broken. The first rotary shaft 210 may extend from a rotary shaft of an auger or may be the rotary shaft of the auger. The first rotary shaft 210 may rotated by a torque transmitted from an auger motor (not shown).

More specifically, the breaking unit 200 may include a plurality of breaking blades 220 and a fixed blade 230.

As illustrated in Fig. 3, the breaking blades 220 may be coupled to the first rotary shaft 210 and may be rotated in the forward direction or the reverse direction. Depending on the rotation direction, the breaking blades 220 may break the ice pieces or may discharge the ice pieces without breaking them. Breaking projections (e.g., breaking teeth) 221 may be formed on one surface of each of the breaking blades 220.

The fixed blade 230 may be fixed to one side of the housing 100. The fixed blade 230 may be disposed in the ice breaking direction of the breaking blades 220. The fixed blade 230 may provide a supporting reaction force when the breaking blades 220 are rotated in a certain direction (e.g., in the forward direction) for breaking the ice pieces. Breaking projections (or breaking teeth) 221 may also be formed in the fixed blade 230. The breaking teeth of the fixed blade 230 face those of the breaking blade 220 when the breaking blade 220 rotates to break the ice pieces, e.g., in the forward direction.

Thus, if the breaking blades 220 are rotated in the forward direction, the ice pieces are broken between the breaking blades 220 and the fixed blade 230 and are discharged through the discharge port 110. If the breaking blades 220 are rotated in the reverse direction, the ice pieces may be discharged to the outside through the discharge port 110 without being broken.

As illustrated in Fig. 2, the second rotary shaft 300 is operatively connected to the first rotary shaft 210 and may be rotated by a torque transmitted from the first rotary shaft 210. In this case, the second rotary shaft 300 may be disposed above the first rotary shaft 210.

To transfer a torque from the first rotary shaft 210 to the second rotary shaft, various implementations may be used, such as using a chain and a sprocket, using a belt and pulleys, etc. In the present embodiment, a driving gear 211 may be disposed at one side of the first rotary shaft 210; and a driven gear 310 may be disposed at one side of the second rotary shaft 300 and mesh with the driving gear 211. The driving gear 211 and the driven gear 310 include spur gears externally meshing with each other or may include helical gears which produce reduced operational noise.

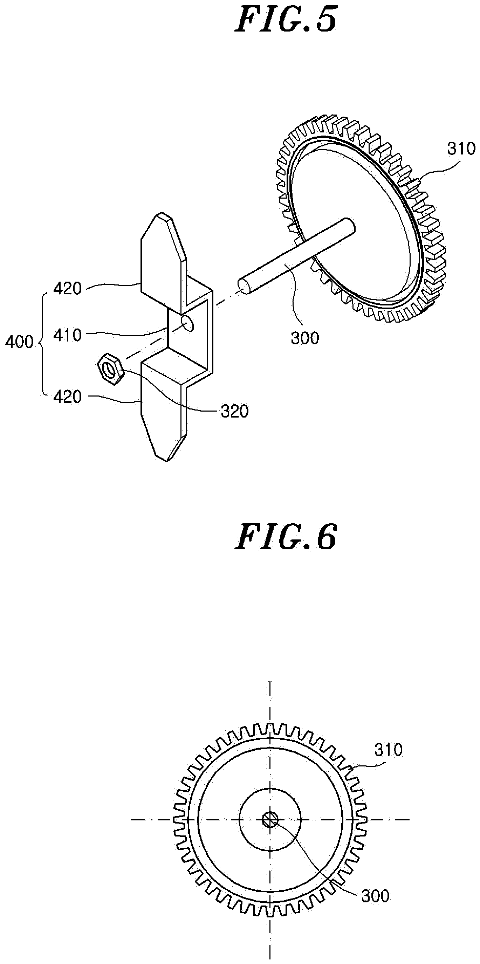

As illustrated in Fig. 6, the second rotary shaft 300 is not eccentric and is fitted to the rotation center of the driven gear 310 to rotate stably.

As illustrated in Fig. 3, the second rotary shaft 300 may not be installed immediately above the first rotary shaft 210. Rather, it may be disposed in a position shifted from an immediately upward position toward one side to facilitate ice pieces entrance toward the breaking unit 200. If the second rotary shaft 300 is disposed immediately above the first rotary shaft 210 (namely, in an immediately upward position), the second rotary shaft 300 may become an obstacle when the ice pieces move toward the breaking unit 200. Thus, the second rotary shaft 300 is disposed in a position shifted toward one side so that the second rotary shaft 300 does not become an obstacle when the ice pieces move toward the breaking unit 200. The shift position of the second rotary shaft 300 may be adjusted by a user. In Fig. 3, the second rotary shaft 300 is disposed in a position shifted to the left side.

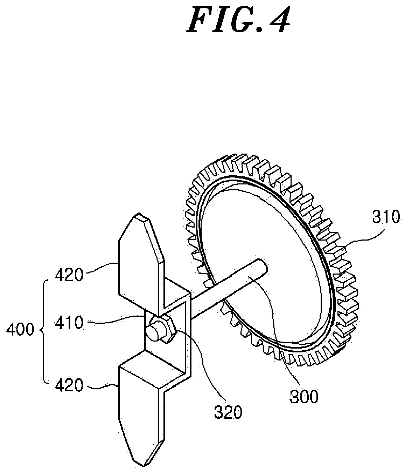

The separation blade 400 will now be described with reference to Figs. 4 and 5.

Fig. 4 is an assembled perspective view illustrating the configurations of the separation blade, the second rotary shaft and the driven gear in the ice bin according to one embodiment of the present disclosure. Fig. 5 is an exploded perspective view of these components.

Referring to Figs. 2, 4 and 5, the separation blade 400 may include a flat plate and may be fitted to the second rotary shaft 300. The separation blade 400 may be disposed parallel to the breaking blades 220 of the breaking unit 200 and may be configured to strike and separate ice piece lumps along with the rotation of the second rotary shaft 300. The ice pieces thus separated can be easily transferred toward the breaking unit 200.

More specifically, as illustrated in Figs. 4 and 5, the separation blade 400 may include a coupling portion 410 and striking portions 420.

The coupling portion 410 may be removably coupled to the second rotary shaft 300 and may have a substantially C-shaped bent structure. To facilitate installation or detachment of the separation blade 400 from the second rotary shaft 300, e.g., for maintenance or replacement of the separation blade 400, an external thread is formed in an end portion of the second rotary shaft 300 and a nut 320 is tightened to the external thread. In this configuration, the coupling portion 410 is removably coupled to the second rotary shaft 300.

The striking portions 420 may extend from the opposite ends of the coupling portion 410 in the radial direction of the second rotary shaft 300 and may be a flat structure generally. The striking portions 420 may rotate together with the second rotary shaft 300 to strike and separate the ice piece lumps in the housing 100.

In the illustrated example, only one separation blade 400 is installed on the second rotary shaft 300. However, e.g., depending on the amount of the ice pieces stored in the housing 100, two or more separation blades may be installed on the second rotary shaft 300. Figs. 2 and 4 illustrate, by way of example, a state in which one separation blade 400 is installed on the second rotary shaft 300. In different embodiments, the number of the separation blades 400 may vary, e.g., in proportion to the storage capacity of the housing 100.

Although exemplary embodiments of the present disclosure are described above with reference to the accompanying drawings, those skilled in the art will understand that the present disclosure may be implemented in various ways without changing the necessary features or the spirit of the present disclosure.

Therefore, it should be understood that the exemplary embodiments described above are not limiting, but only an example in all respects. The scope of the present disclosure is expressed by claims below, not the detailed description, and it should be construed that all changes and modifications achieved from the meanings and scope of claims and equivalent concepts are included in the scope of the present disclosure.

From the foregoing, it will be appreciated that various embodiments of the present disclosure have been described herein for purposes of illustration, and that various modifications may be made without departing from the scope and spirit of the present disclosure. The exemplary embodiments disclosed in the specification of the present disclosure do not limit the present disclosure. The scope of the present disclosure will be interpreted by the claims below, and it will be construed that all techniques within the scope equivalent thereto belong to the scope of the present disclosure.

## Claims

1. An ice bin installed in a refrigerator, the ice bin comprising:
a housing configured to store ice pieces;
a discharge port disposed in the housing for discharging the ice pieces from the housing; and
a separation blade disposed in the housing and configured to strike and separate ice piece agglomerates present in the housing.

2. The ice bin of Claim 1, wherein the discharge port is disposed in a lower portion of the housing.

3. The ice bin of Claim 1 further comprising:
a first rotary shaft disposed in the housing;
a breaking unit rotatably installed in the discharge port and configured to rotate about the first rotary shaft;
a second rotary shaft coupled to the first rotary shaft; and
the separation blade coupled to the second rotary shaft and configured to strike and separate the ice piece agglomerates into ice pieces responsive to rotation of the second rotary shaft.

4. The ice bin of Claim 3, wherein the separation blade is coupled to the second rotary shaft in a parallel relationship with the breaking unit.

5. The ice bin of Claim 3, wherein the breaking unit comprises a breaking blade coupled to the first rotary shaft and configured to rotate in a first direction and a second direction, wherein the breaking blade is configured to break the ice pieces only when rotating in the first direction.

6. The ice bin of Claim 5 further comprising a fixed blade fixed to a side of the housing, wherein the fixed blade is operable to provide a supporting reaction force when breaking the ice pieces.

7. The ice bin of Claim 3, wherein the second rotary shaft comprises a driven gear meshing with a driving gear of the first rotary shaft, and wherein further the second rotary shaft is coupled to a center of rotation of the driven gear.

8. The ice bin of Claim 3, wherein the second rotary shaft is disposed in a position shifted from an immediately upward position of the first rotary shaft.

9. The ice bin of Claim 3, wherein the separation blade comprises:
a coupling portion removably coupled to the second rotary shaft and having a substantially C-shaped bent structure; and
striking portions extending from opposite ends of the coupling portion in a radial direction of the second rotary shaft and configured to strike and separate the ice piece agglomerates.

10. The ice bin of Claim 9, wherein the separation blade comprises one or more separation blades.

11. A refrigerator comprising:
an ice maker configured to produce ice pieces; and
an ice bin described in Claim 1, which is coupled to the ice maker.

12. The refrigerator of Claim 11 further comprising:
a main body provided with a storage compartment; and
a door coupled to the main body for sealing the storage compartment,
wherein the ice maker is disposed in the door.

13. The refrigerator of Claim 11, wherein the ice bin further comprises:
a first rotary shaft disposed in the housing;
a breaking unit rotatably installed in the discharge port and configured to rotate about the first rotary shaft;
a second rotary shaft coupled to the first rotary shaft; and
the separation blade coupled to the second rotary shaft and configured to strike and separate the ice piece agglomerates into ice pieces responsive to rotation of the second rotary shaft.

14. The refrigerator of Claim 13, wherein the separation blade is coupled to the second rotary shaft in a parallel relationship with the breaking unit.

15. The refrigerator of Claim 13, wherein the separation blade comprises:
a coupling portion removably coupled to the second rotary shaft and having a substantially C-shaped bent structure; and
striking portions extending from opposite ends of the coupling portion in a radial direction of the second rotary shaft and configured to strike and separate the ice piece agglomerates.
